# EUROPÄISCHE PATENTANMELDUNG

(11) **EP 0 796 030 A2**
(43) Veröffentlichungstag der Anmeldung: **17.09.1997**
(21) Anmeldenummer: 97250078.9
(22) Anmeldetag: 14.03.1997
(51) Int. Cl.: H04Q 11/04

(54) **Telekommunikationsanlage**

(30) Priorität: 14.03.1996 DE 29605536 U
(71) Anmelder: ELMEG GmbH Kommunikationstechnik, D-31228 Peine (DE)
(72) Erfinder: Meyer Andreas, D-38159 Vechelde (DE); Hunfeld Johann, D-31234 Edemissen (DE); Klöpper Dietmar, D-30167 Hannover (DE); Oppermann, D-38179 Gross Schwülper (DE)
(74) Vertreter: Christiansen, Henning, Dipl.-Ing.

(57) **Zusammenfassung**

Vermittlungseinrichtung für eine Telekommunikationsanlage (1) zum Betrieb von ISDN-Endgeräten (4.1 bis 4.4) und/oder analogen Telekommunikations-Endgeräten (5.1 bis 5.4) am ISDN-Netz, mit mindestens einer ISDN-Anschlußeinheit (7.1 bis 7.4) zum Anschluß eines ISDN-Endgerätes (4.1 bis 4.4) und/oder mindestens einem ersten Schnittstellenwandler (6.1 bis 6.4) zur Verbindung mit einem analogen Endgerät (5.1 bis 5.4), wobei die ISDN-Anschlußeinheit (7.1 bis 7.4) und/oder der erste Schnittstellenwandler (6.1 bis 6.4) mit einem zur Übertragung von Daten sowie zur Steuerung der Datenübertragung dienenden internen Bus (S₀) verbunden sind, sowie mit einem integrierten zweiten Schnittstellenwandler (NT, 2) zum Anschluß an eine digitale Vermittlungsstelle (DIVO, 3), der netzseitig eine U_{KO}-Schnittstelle oder eine U_{2M}-Schnittstelle aufweist und benutzerseitig mit dem internen Bus (S₀) verbunden ist.

## Beschreibung

Die Erfindung betrifft eine Vermittlungseinrichtung für eine Telekommunikationsanlage zum Betrieb von ISDN-Endgeräten und/oder analogen Telekommunikations-Endgeräten am ISDN-Netz gemäß dem Oberbegriff des Anspruchs 1.

Eine derartige Einrichtung ist beispielsweise aus BADACH, A.: ISDN im Einsatz, DATACOM-Verlag 1994, S. 65 bekannt und wird an das vom ISDN-Netzbetreiber im Hause des Benutzers installierte Netzabschlußgerät (NT - Network Terminator) angeschlossen.

Das Netzabschlußgerät hat die Aufgabe, die ISDN-Anlage mit der digitalen Ortsvermittlungsstelle (DIVO - digitale Vermittlungsstelle Ortsnetz) zu verbinden, um einen Verbindungsaufbau mit anderen Teilnehmern zu ermöglichen. Hierzu weist das Netzabschlußgerät bei einem ISDN-Basisanschluß netzseitig eine sogenannte U_{K0}-Schnittstelle auf, die über eine 2-Draht-Leitung - in der Regel eine herkömmliche Telefonleitung - mit der Vermittlungsstelle verbunden ist und zur Datenübertragung zwei sogenannte B-Kanäle mit einer Übertragungskapazität von jeweils 64 kBit/s sowie zur Steuerung der Datenübertragung einen sogenannten D-Kanal mit einer Übertragungskapazität von 16 kBit/s aufweist. Benutzerseitig ist dagegen eine sogenannte S₀-Schnittstelle vorgesehen, die über einen durch eine 4-Draht-Leitung realisierten Bus - im folgenden als S₀-Bus bezeichnet - den Anschluß der ISDN-Endgeräte ermöglicht.

Darüber hinaus benötigt der Benutzer zusätzlich zu der Telekommunikationsanlage stets einen separaten Wandler zwischen dem S₀-Bus und der für die zu verwendenden Endgeräte maßgeblichen Übertragungsnorm, was bei der Einrichtung eines ISDN-Anschlusses zusätzliche Kosten verursacht.

Der Erfindung liegt deshalb die Aufgabe zugrunde, eine Vermittlungseinrichtung für eine Telekommunikationsanlage zu schaffen, die den Betrieb von Telekommunikations-Endgeräten am ISDN-Netz ermöglicht und bei der Einrichtung eines ISDN-Anschlusses ein möglichst geringen Aufwand erfordert.

Die Aufgabe wird, ausgehend von einer Telekommunikationsanlage gemäß dem Oberbegriff des Anspruchs 1, durch dessen kennzeichnende Merkmale gelöst.

Die Erfindung schließt die technische Lehre ein, in das Gehäuse der Vermittlungseinrichtung einen Schnittstellenwandler zu integrieren, der netzseitig eine U_{K0}-Schnittstelle oder eine U_{2M}-Schnittstelle aufweist und somit den direkten Anschluß der Telekommunikationsanlage an die Zweidrahtleitung einer digitalen Ortsvermittlungsstelle ermöglicht, ohne daß ein separates Netzabschlußgerät zwischen geschaltet werden müßte, welches seinerseits zusätzlich eine separate Stromversorgung benötigt. Durch das Vorsehen von zusätzlichen Steckverbindern für die anzuschließenden Geräte ist der Installationsaufwand auf ein Minimum reduziert, da nicht nur die Zahl der zwischen Amtsleitung und Teilnehmer fest zu installierenden Baugruppen reduziert, sondern auch dessen Anschlußweise stark vereinfacht ist. Damit ergibt auch für den Anschluß mehrerer Teilnehmerendgeräte eine Optimierung sowohl hinsichtlich des Geräteaufwands als auch hinsichtlich der aufzuwendenden Installationszeit.

Der Scnittstellenwandler steht anlagenseitig unmittelbar mit dem internen Prozessor in Verbindung und stellt diesem mit den üblichen Protokollen die B-Kanäle und den D-Kanal zur Verfügung. Damit entfällt eine zusätzliche Zwischenwandlung auf einen 4-Draht S₀-Bus. Auf diese Weise ist mit geringem Aufwand ein Betrieb von herkömmlichen analogen Endgeräten am ISDN-Netz möglich. Dies ist besonders deshalb günstig, weil es auf diese Weise mit minimalem Aufwand möglich ist, die herkömmlichen Geräte weiter an einem digitalisierten ISDN-Anschluß zu betreiben, so daß auch bei Digitalisierung eines Telefonanschlusses nicht unmittelbar alle vorhandenen Endgeräte neu beschafft werden müssen. Hierbei können die Vermittlungsfunktionen und internen Funktionen der Anlage trotzdem schon in digitalisierter Technik durchgeführt werden. Auch braucht vom Netzwerkbetreiber bei der Umstellung von einem analogen Anschluß zum digitalen Anschluß beim Teilnehmer keinerlei Installationsaufwand betrieben zu werden, da der alte analoge Zweitdrahtanschluß auch nach Umstellung auf Digitaltechnik weiter die Anschlußstelle bildet. Das Ersetzen der Anlage kann unmittelbar vom Teilnehmer selbst vorgenommen werden.

Wenn ein S₀-Bus auch teilnehmerseitig zur Verfügung gestellt werden soll, so ist dieser Teil der sekundären Vermittlungstruktur und unabhängig von der Amtseite. Die entsprechenden Schnittstellenbausteine stehen intern ebenfalls mit dem Prozessor über die internen Protokolle in Verbindung, so daß die Funktionalität einer Anlage mit getrenntem teilnehmerseitigem S₀-Bus entsteht. Statt SoSchnittstellenbausteine auf der Amtsseite vorzusehen, sind diese in diesem Fall ausschließlich auf der Teilnehmerseite vorgesehen, was den Vermittlungsfähigkeiten der Anlage in-soweit zugute kommt, als daß über diese S₀-Schnittstelle unabhängig vom Amt verfügt werden kann, da sie teilnehmerseitig betrieben wird und vom Amtsanschluß durch Struktur des internen Prozessors getrennt ist.

Die erfindungsgemäße Telekommunikationsanlage ermöglicht also den Betrieb von Telekommunikations-Endgeräten an einem ISDN-Anschluß, der vorzugsweise als ISDN-Basisanschluß ausgeführt ist, d.h. zwei B-Kanäle zur Datenübertragung mit einer Übertragungskapazität von jeweils 64 kBit/s und einen D-Kanal mit einer Übertragungskapazität von 16 kBit/s zur Steuerung der Datenübertragung aufweist. In dieser Ausführungsform weist der Schnittstellenwandler netzseitig eine sogenannte U_{K0}-Schnittstelle auf, die über eine herkömmliche 2-adrige Telefonleitung mit der OrtsVermittlungsstelle verbunden werden kann. Teilnehmerseitig stellt der Schnittstellenwandler hierbei vorzugsweise eine sogenannte So-Schnittstelle bereit, die die Kommunikation mit handelsüblichen ISDN-Endgeräten ermöglicht und physikalisch durch eine 4-Draht-Leitung realisiert wird.

Die erfindungsgemäße Telekommunikationsanlage ist jedoch nicht auf den Betrieb an einem ISDN-Basisanschluß beschränkt, sondern in entsprechender Modifizierung auch an einem ISDN-Primärmultiplexanschluß betreibbar, der sich von dem ISDN-Basisanschluß durch eine wesentlich größere Übertragungskapazität unterscheidet und zur Datenübertragung 30 B-Kanäle mit einer Übertragungskapazität von jeweils 64 kBit/s sowie zur Steuerung der Datenübertragung einen D-Kanal mit einer Übertragungskapazität von ebenfalls 64 kBit/s aufweist. In diesem Fall weist der Schnittstellenwandler zur Verbindung mit der OrtsVermittlungsstelle netzseitig eine sogenannte U_{2M}-Schnittstelle auf. Teilnehmerseitig verfügt der Schnittstellenwandler dagegen vorzugsweise über eine sogenannte S_{2M}-Schnittstelle.

Der Schnittstellenwandler hat also die Aufgabe, eine Konvertierung durchzuführen unmittelbar zwischen den teilnehmerseitigen Signalen einerseits und den entsprechend der U_{K0}- bzw. U_{2M}-Schnittstelle genormten netzseitigen Signalen andererseits, um einen direkten Anschluß der Telekommunikationsanlage an eine Ortsvermittlungsstelle zu ermöglichen.

Die Telekommunikations-Endgeräte werden hierbei jedoch nicht direkt an den Schnittstellenwandler angeschlossen, sondern in der Regel unter Zwischenschaltung von ISDN-Anschlußeinheiten, die über einen internen Bus mit dem Schnittstellenwandler verbunden sind. Die einzelnen ISDN-Anschlußeinheiten bestehen hierbei vorzugsweise aus Anschlußdosen, die mit dem internen Bus verbunden sind und einen Anschluß der ISDN-Endgeräte durch einfaches Einstekken ermöglichen.

Entsprechend der ISDN-Konvention ist der teilnehmerseitige Bus bei einem ISDN-Basisanschluß vorzugsweise ein S₀-Bus bzw. bei einem Primärmultiplexanschluß ein S_{2M}-Bus, was die Kommunikation mit handeslüblichen ISDN-Endgeräten ermöglicht. In beiden Fällen wird der interne Bus physikalisch vorzugsweise durch eine 4-Draht-Leitung realisiert.

Um Störungen der Datenübertragung durch Leitungsreflexionen auf dem Bus zu vermeiden, ist in einer bevorzugten Ausführungsform der Erfindung vorgesehen, den internen Bus an seinem freien Ende mit einem Abschlußwiderstand zu verbinden, dessen Wert zur optimalen Unterdrückung der Leitungsreflexionen vorzugsweise gleich dem Wellenwiderstand des Bus ist. Bei einer physikalischen Realisierung des S₀- oder S_{2M}-Bus als 4-Draht-Leitung werden hierbei jeweils zwei Leitungen durch einen Widerstand R=100Ω verbunden.

In einer bevorzugten Ausführungsform der Erfindung ist der interne Bus - in der Regel der S₀- oder S_{2M}-Bus - zusätzlich an der Vermittlungseinrichtung teilnehmerseitig vorhanden, um den Anschluß auch digitaler Endgeräte per einfacher Steckverbindung zu ermöglichen. Bei der erfindungsgemäßen Lösung besteht der Vorteil, daß hier - wie sonst bei kleineren Vermittlungseinrichtungen vielfach üblich - der S₀-Bus nicht mit der Ortsvermittlungsstelle verbunden ist - intern geführte Gespräche also gebührenfrei sind.

Auf diese Weise ist es beispielsweise möglich, im Rahmen einer ISDN-Hausinstallation in mehreren Büroräumen jeweils ein Endgerät vorzusehen. Auch hierbei wird das freie Ende des Bus mit einem Abschlußwiderstand verbunden, um Störungen der Datenübertragung durch Leitungsreflexionen zu verhindern. Da sich das freie Ende des Bus hierbei jedoch außerhalb der erfindungsgemäßen Telekommunikationsanlage befindet, ist der integrierte Abschlußwiderstand in diesem Fall überflüssig und deshalb gemäß einer vorteilhaften weiterbildenden Variante der Erfindung über ein Schaltelement mit dem Bus verbunden, das eine Trennung des Abschlußwiderstands von dem Bus ermöglicht, falls der Bus aus der Telekommunikationsanlage herausgeführt und durch einen externen Abschlußwiderstand abgeschlossen ist.

Die vorstehend beschriebenen Varianten der Erfindung beziehen sich in erster Linie auf den Anschluß von ISDN-Endgeräten. Falls jedoch ausschließlich analoge Endgeräte an der Telekommunikationsanlage betrieben werden sollen, ist es nicht erforderlich, innerhalb der Telekommunikationsanlage einen ISDN-normgemäßen S₀- bzw. S_{2M}-Bus vorzusehen, da die analogen Endgeräte ohnehin nicht für einen Betrieb an einem S₀-Bus geeignet sind und somit eine Konvertierung zwischen den netzseitig vorliegenden digitalen ISDN-Signalen einerseits und den benutzerseitig vorliegenden analogen Signalen andererseits durchzuführen ist. In diesem Fall verbindet der interne Bus also lediglich den netzseitig angeordneten Schnittstellenwandler mit einem oder mehreren weiteren Schnittstellenwandlern, die eine Digital/Analog-Wandlung durchführen und dadurch einen Betrieb herkömmlicher analoger Endgeräte an dem ISDN-Anschluß ermöglichen. Derartige Schnittstellenwandler sind an sich bekannt und werden entsprechend der gebräuchlichen ISDN-Terminologie auch als Terminaladapter a/b bezeichnet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung den Vermittlungsteil einer Telekommunikationsanlage als Blockschaltbild sowie
- Figur 2: den äußeren Aufbau des Vermittlungsteils aus Figur 1 in perspektivischer Darstellung.

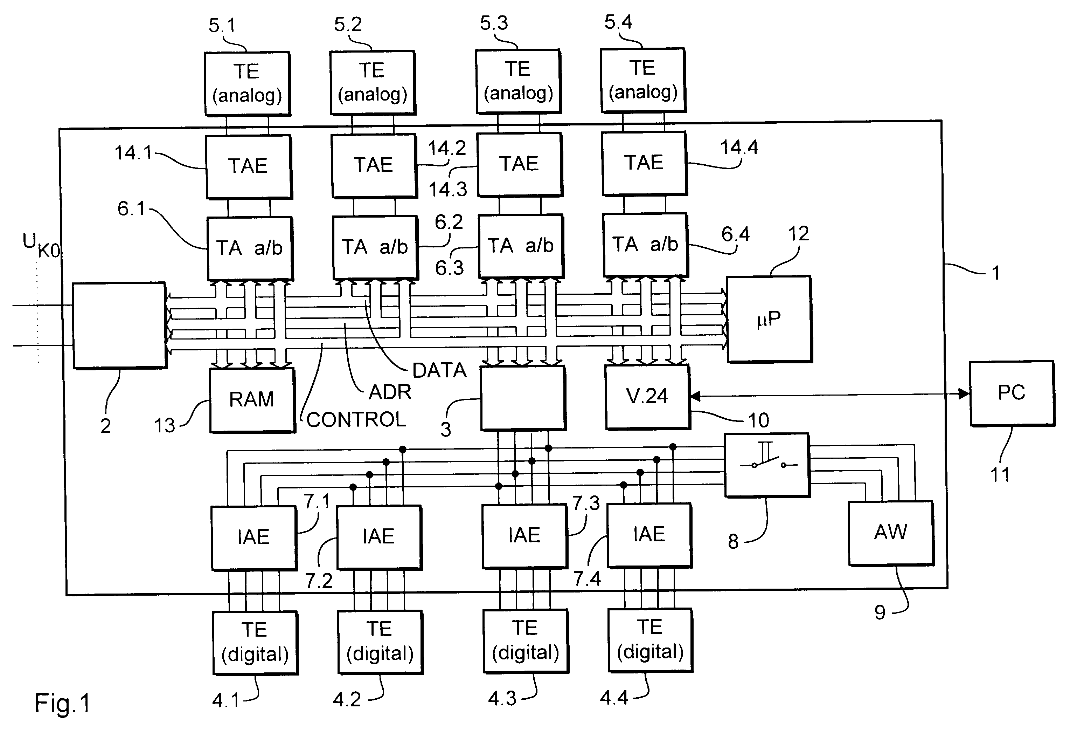

Die in Figur 1 dargestellte Vermittlungseinrichtung 1 ermöglicht ohne Installationsarbeiten den Anschluß von bis zu vier digitalen ISDN-Endgeräten 4.1 bis 4.4 und bis zu vier herkömmlichen analogen Endgeräten 5.1 bis 5.4 an einen ISDN-Basisanschluß, ohne ein separates Netzabschlußteil zwischenschalten zu müssen. Hierzu verfügt die Vermittlungseinrichtung 1 über einen integrierten zweiten Schnittstellenwandler 2, das netzseitig eine ISDN-normgemäße U_{K0}Schnittstelle aufweist, die über eine herkömmliche 2-adrige Telefonleitung mit der Ortsvermittlungsstelle verbunden wird und zur Datenübertragung zwei B-Kanäle mit einer Übertragungskapazität von jeweils 64 kBit/s sowie einen D-Kanal mit einer Übertragungskapazität von 16 kBit/s zur Steuerung der Datenübertragung bereitstellt. Die für eine herkömmliche Telefonleitung relativ hohe Übertragungsrate wird hierbei durch den Einsatz hochintegrierter Schaltungen in dem integrierten zweiten Schnittstellenwandler 2 ermöglicht.

Teilnehmerseitig ist der zweite Schnittstellenwandler 2 über jeweils einen Daten-, Adreß- und Steuerbus mit einem Mikroprozessorsystem verbunden, das ein Koppelfeld bildet, welches die Vermittlung von Verbindungen zwischen der Ortsvermittlungsstelle bzw. den externen Teilnehmern einerseits und den an die Vermittlungseinrichtung 1 anschließbaren Endgeräten 4.1 bis 4.4 bzw. 5.1 bis 5.4 andererseits ermöglicht. Durch die Integration des zweiten Schnittstellenwandlers 2 in die Vermittlungseinrichtung 1 entfällt vorteilhaft der bei einem separaten Netzabschlußgerät zur Konvertierung zwischen der netzseitigen U_{K0}-Schnittstelle einerseits und der teilnehmerseitigen S₀-Schnittstelle andererseits erforderliche Schnittstellenbaustein, so daß der in das Gehäuse des Vermittlungsteils einbezogene zweite Schnittstellenwandler aus einem einzigen Schnittstellenbaustein besteht, der die Konvertierung zwischen der netzseitigen Uₖ₀-Schnittstelle einerseits und den Mikroprozessorbus-Signalen andererseits durchführt.

Die Steuerung des Datenflusses und damit die Vermittlung innerhalb des Koppelfeldes erfolgt hierbei durch den Mikroprozessor, der über den Steuer-, Daten- bzw. Adreßbus mit dem integrierten zweiten Schnittstellenwandler 2 verbunden ist, um eingehende Daten annehmen zu können sowie die von den Endgeräten 4.1 bis 4.4 bzw. 5.1 bis 5.4 herrührenden Daten über die U_{K0}-Schnittstelle zur Vermittlungsstelle übertragen zu können.

Darüber hinaus sind mit dem Mikroprozessorsystem mehrere Schnittstellenwandler 6.1 bis 6.4 verbunden, die entsprechend der gebräuchlichen ISDN-Terminologie auch als Terminaladapter a/b bezeichnet werden und eine Konvertierung zwischen den auf dem Daten-, Adreß- bzw. Steuerbus anliegenden digitalen Signalen einerseits und den zum Betrieb herkömmlicher analoger Endgeräte 5.1 bis 5.4 erforderlichen analogen Signale andererseits bewirken. Teilnehmerseitig sind diese Schnittstellenwandler 6.1 bis 6.4 jeweils mit einer TAE-Steckdose 14.1 bis 14.4 verbunden, die über eine einfache, mit einem TAE-Stecker versehene 2-Draht-Leitung eine Verbindung mit analogen Endgeräten 5.1 bis 5.4 ermöglichen.

Die dargestellte Vermittlungseinrichtung 1 ermöglicht jedoch nicht nur die Konvertierung zwischen den analogen Signalen der herkömmlichen Endgeräte 5.1 bis 5.4 einerseits und den digitalen Mikroprozessorbus-Signalen andererseits, sondern darüber hinaus die Nutzung der über den D-Kanal des ISDN-Anschlusses übertragenen Steuerinformationen, die von den analogen Endgeräten 5.1 bis 5.4 nicht ausgewertet werden können. So wird im ISDN-Netz über den D-Kanal eine Vielzahl von Informationen übertragen, die die Datenübertragung steuern oder Zusatzinformationen über die Verbindung enthalten.

Eine derartige Zusatzinformation ist beispielsweise die sogenannte Multiple Subscriber Number (MSN), die als Zusatz zu der allgemeinen Rufnummer des ISDN-Anschlusses eine Identifizierung und Adressierung eines bestimmten ISDNEndgeräts ermöglicht.

Darüber hinaus wird bei einer Verbindung zwischen ISDN-Endgeräten über den D-Kanal eine sogenannte Dienstekennung übertragen, die eine Identifizierung der von dem jeweiligen ISDN-Endgerät unterstützten Telekommunikationsdienstleistungen erlaubt und somit eine Verbindung zwischen inkompatiblen ISDN-Endgeräten verhindert.

Da die analogen Endgeräte 5.1 bis 5.4 diese ISDN-spezifischen Zusatzinformationen nicht generieren bzw. nicht "verstehen", müssen diese Signale bei einem eingehenden Anruf von dem Mikroprozessorsystem interpretiert und umgesetzt werden. Bei einem Verbindungsaufbau durch eines der analogen Endgeräte 5.1 bis 5.4 müssen die ISDN-spezifischen Zusatzinformationen dagegen hinzugefügt werden.

Zur Festlegung dieser Steuer- bzw. Zusatzinformationen weist das Mikroprozessorsystem einen Speicherbaustein 13 (RAM/ROM) auf, der tabellenartig organisiert ist und jedem Anschluß für die analogen Endgeräte 5.1 bis 5.4 jeweils eine Dienstekennung sowie eine MSN zuordnet. Bei einem eingehenden Anruf liest der Mikroprozessor 12 dann aus dem D-Kanal die von dem Anrufer gewünschte MSN aus und leitet den Anruf an das zugehörige analoge Endgerät 5.1 bis 5.4 weiter.

Das Mikroprozessorsystem ist weiterhin mit dem Schnittstellenbaustein 3 verbunden, der eine S₀-Schnittstelle bereitstellt und somit den Betrieb herkömmlicher ISDN-Endgeräte 4.1 bis 4.4 ermöglicht. Die S₀-Schnittstelle des Schnittstellenbausteins 3 ist hierbei über einen physikalisch als 4-Draht-Leitung realisierten S₀-Bus mit mehreren ISDN-Anschlußeinheiten 7.1 bis 7.4 verbunden, die als Steckdosen ausgeführt sind und den direkten Anschluß von ISDN-Endgeräten 4.1 bis 4.4 durch einfaches Einstecken ermöglichen.

Um Übertragungsstörungen auf dem S₀-Bus zu vermeiden, ist dieser an seinem freien Ende über einen Trennschalter 8 mit einem Abschlußwiderstand 9 verbunden, der Leitungsreflexionen auf dem S₀-Bus verhindert. Der Trennschalter 8 ermöglicht hierbei eine Trennung des Abschlußwiderstands 9 vom S₀-Bus, was beispielsweise dann erforderlich ist, wenn der S₀-Bus über eine der ISDN-Anschlußeinheiten 7.1 bis 7.4 aus der Vermittlungseinrichtung herausgeführt ist und durch einen externen Abschlußwiderstand abgeschlossen wird.

Darüber hinaus verfügt die Vermittlungseinrichtung 1 über eine serielle Schnittstelle (V.24) 10, die eine Einrichtprogrammierung über einen externen Rechner (PC) 11 ermöglicht. Auf diese Weise ist es beispielsweise möglich, jedem analogen Endgerät 5.1 bis 5.4 eine beliebige MSN zuzuweisen. Hierdurch kann die Vermittlungseinrichtung 1 entsprechend den Bedürfnissen des Benutzers konfiguriert werden.

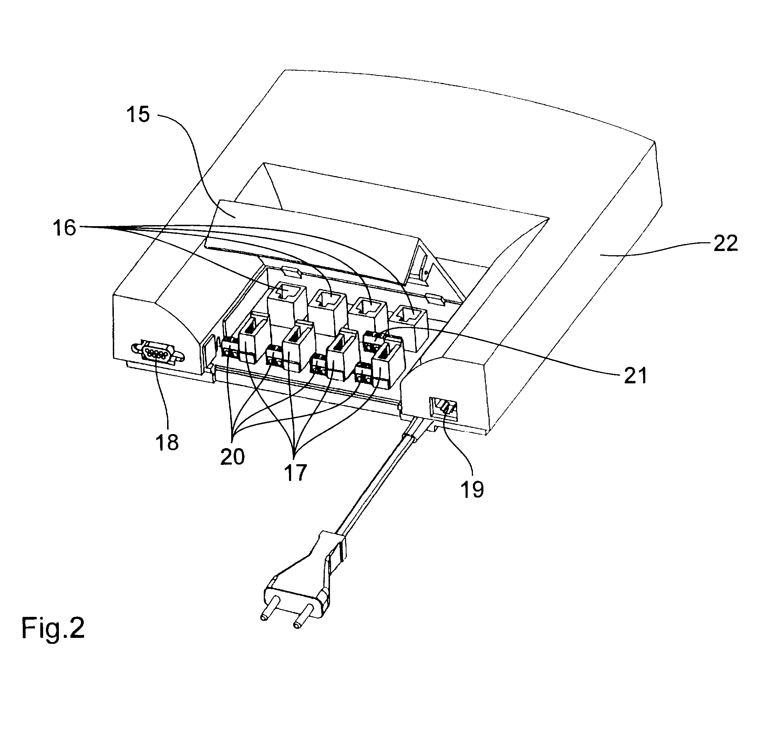

Wie aus der in Figur 2 gezeigten perspektivischen Darstellung ersichtlich, ist die Vermittlungseinrichtung 1 in einem Kunststoffgehäuse 22 angeordnet, das wahlweise eine hängende Montage an einer Wand oder den Betrieb als Standgerät ermöglicht.

An der Gehäuseoberseite ist hierbei eine Vertiefung eingelassen, in der - unter einer Abdeckplatte 15 versteckt - vier TAE-Anschlußdosen 17 zum Anschluß analoger Endgeräte sowie vier ISDN-Anschlußdosen 16 zum Anschluß von ISDN-Endgeräten angeordnet sind. Um beim Fehlen eines geeigneten Steckers an dem anzuschließenden Endgerät trotzdem eine Verbindung herstellen zu können, ist neben den Anschlußdosen 17 jeweils eine mit der zugehörigen Anschlußdose parallelgeschaltete Klemmleiste 20 angeordnet.

Weiterhin befindet sich an der Außenseite eine Anschlußdose 19 zur Verbindung der Vermittlungseinrichtung mit einer Ortsvermittlungsstelle sowie eine 9-polige Anschlußdose 18 zur Verbindung mit der seriellen Schnittstelle eines externen Bedienrechners, um die Vermittlungseinrichtung individuell konfigurieren zu können.

Darüber hinaus befindet sich unter der Abdeckklappe 15 der Abschlußwiderstand 21, der aus zwei 100Ω-Widerständen besteht, die jeweils mit zwei Leitungen des physikalisch als 4-Draht-Leitung realisierten S₀-Bus verbunden sind, um Leitungsreflexionen auf dem S₀-Bus zu verhindern.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Vermittlungseinrichtung für eine Telekommunikationsanlage (1) zum Verbinden von analogen Telekommunikations-Endgeräten (5.1 bis 5.4) mit dem ISDN-Netz, mit einem Gehäuse (22) zur Aufnahme mindestens eines ersten Schnittstellenwandlers (6.1 bis 6.4) zur Verbindung mit jeweils einem analogen Endgerät (5.1 bis 5.4), wobei der erste Schnittstellenwandler (6.1 bis 6.4) mit einem zur Übertragung von Daten sowie zur Steuerung der Datenübertragung dienenden Prozessorsystem verbunden sind, welche über einen zweiten Schnittstellenwandler mit dem ISDN-Netz verbunden ist,
**dadurch gekennzeichnet,**
daß der innerhalb des Gehäuses (22) der Vermittlungseinrichtung angeordnete zweite Schnittstellenwandler (NT, 2) zum unmittelbaren Anschluß an eine digitale Vermittlungsstelle (DIVO, 3) über eine Zweidrahtleitung netzseitig eine U_{K0}-Schnittstelle oder eine U_{2M}-Schnittstelle aufweist und
daß der Schnittstellenwandler (6.1 bis 6.4) ausgangsseitig zum Anschluß eines Telekommunikations-Endgerätes (4.1 bis 4.4, 5.1 bis 5.4) jeweils ein Steckverbindungselement (16, 17) aufweist.

2. Vermittlungseinrichtung nach Anspruch 1, **dadurch gekennzeichnet,** daß das interne Prozessorsystem über einen zweiten Schnittstellenwandler 3 mit einem teilnehmerseitigen S₀-Bus oder S_{2M}-Bus verbunden ist.

3. Vermittlungseinrichtung nach Anspruch 1, **dadurch gekennzeichnet,** daß der zweite Schnittstellenwandler mit mindestens einer ISDN-Anschlußeinheit (7.1 bis 7.4) zum Anschluß eines ISDN-Endgerätes (4.1 bis 4.4) und/oder die ISDN-Anschlußeinheit (7.1 bis 7.4) verbunden ist.

4. Vermittlungseinrichtung nach Anspruch 1 oder 2, **gekennzeichnet durch** einen integrierten Abschlußwiderstand (AW, 9), der zur Vermeidung von durch Leitungsreflexionen verursachten Übertragungsstörungen an das freie Ende des Bus (S₀) angeschlossen ist.

5. Vermittlungseinrichtung nach Anspruch 3, **dadurch gekennzeichnet,** daß der Abschlußwiderstand (AW, 9) über ein Schaltelement (8) mit dem Bus (S₀) verbunden ist.

6. Vermittlungseinrichtung nach Anspruch 3 oder 4, **dadurch gekennzeichnet,** daß der Wert des Abschlußwiderstands (AW, 9) zur optimalen Unterdrückung von Leitungsreflexionen im wesentlichen gleich dem Wellenwiderstand des Bus (S₀) ist.

7. Vermittlungseinrichtung nach einem der vorhergehenden Ansprüche, **dadurch gekennzeichnet,** daß die ISDN-Anschlußeinheit (7.1 bis 7.4) und/oder der Schnittstellenwandler (6.1 bis 6.4) ausgangsseitig zum Anschluß eines Telekommunikations-Endgerätes (4.1 bis 4.4, 5.1 bis 5.4) jeweils gegebenenfalls zusätzlich in Parallelschaltung eine Klemmleiste (20) aufweist.
